# EUROPÄISCHE PATENTSCHRIFT

(11) **EP 2 848 346 B1**
(45) Veröffentlichungstag und Bekanntmachung des Hinweises auf die Patenterteilung: **31.10.2018**
(21) Anmeldenummer: 14184484.5
(22) Anmeldetag: 11.09.2014
(51) Int. Cl.: B23D 61/12

(54) **Sägeband mit profiliertem Bandrücken**
Saw band with a profiled back
Lame de scie à partie dorsale profilée

(30) Priorität: 13.09.2013 DE 102013110120
(43) Veröffentlichungstag der Anmeldung: 18.03.2015
(73) Patentinhaber: WIKUS-Sägenfabrik Wilhelm H. Kullmann GmbH & Co. KG, 34286 Spangenberg (DE)
(72) Erfinder: Kullmann, Dr. Jörg H., 34286 Spangenberg (DE); Gleim, Dr. Patrick, 35279 Neustadt (DE); Siel, Christoph, 36199 Rotenburg an der Fulda (DE)
(74) Vertreter: REHBERG HÜPPE + PARTNER

(56) Entgegenhaltungen:
- EP-A2- 0 795 369
- WO-A1-2014/007743
- DE-A1- 2 021 800
- JP-A- 2008 105 176
- US-A- 4 423 653

## Beschreibung

### TECHNISCHES GEBIET DER ERFINDUNG

Die Erfindung betrifft ein Sägeband mit einem Zahntragekörper und einer Mehrzahl von an dem Zahntragekörper angeordneten Zähnen. Gegenüberliegend zu den Zähnen weist das Sägeband einen Bandrücken mit einem Bandrückenprofilabschnitt auf.

Der Bandrücken erstreckt sich also nicht in der üblichen geradlinigen Bandlaufrichtung des Sägebands, sondern er ist profiliert ausgebildet und weist mehrere Bereiche auf, die sich unter unterschiedlichen Winkeln zur üblichen geradlinigen Bandlaufrichtung erstrecken.

Der Zahntragekörper und die Zahnbasis bestehen bevorzugt aus Metall, insbesondere aus Vergütungsstahl. Die Schneide und zumindest ein weiterer Teil der Zahnspitze der Zähne besteht ebenfalls aus Metall, insbesondere aus legiertem Werkzeugstahl bzw. Schnellarbeitsstahl, oder abrasiven Schneidstoffen, wie z. B. Hartmetall, Cermet, keramischen Schneidstoffen oder Diamant. Dieses Material ist härter ist als das Material des Zahntragekörpers, wodurch sich das Sägeband insgesamt besonders gut zum Sägen von Metallwerkstoffen eignet. Die Zähne können auch eine Hartstoffschicht aufweisen, die zu einer Erhöhung der Verschleißfestigkeit führt. Es ist aber auch möglich, andere Werkstoffe - insbesondere Holz oder Kunststoffe - mit derartigen Sägebändern zu sägen.

### STAND DER TECHNIK

Im Stand der Technik sind allgemein Sägebänder bekannt, die einen geraden und unprofilierten Bandrücken aufweisen, der sich in der üblichen geradlinigen Bandlaufrichtung erstreckt. Hierdurch ergeben sich eine gleichmäßige Vorschubgeschwindigkeit, immer die gleiche Vorschubrichtung und konstante Schnittkräfte. Während des Sägens entstehen im Material des zu sägenden Werkstücks kaltverfestigte Zonen. Diese können mit einem solchen Sägeband nicht unterschnitten werden. Es befinden sich stets viele Zähne voll im Eingriff. Hierdurch ergeben sich hohe Zerspanungskräfte, ein hoher Verschleiß und dementsprechend eine verringerte Lebensdauer des Sägebands.

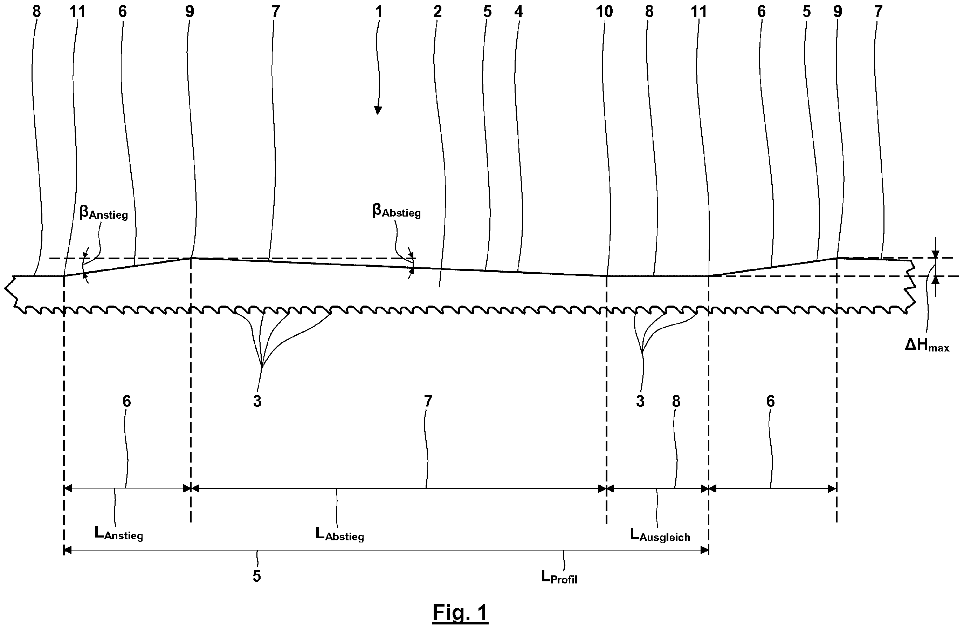

Aus der deutschen Patentschrift DE697 17 699T2 und der europäischen Patentanmeldung EP0 795 369A2 aus derselben Patentfamilie ist ein Sägeband mit einem Zahntragekörper und einer Mehrzahl von an dem Zahntragekörper angeordneten Zähnen bekannt. Der den Zähnen gegenüberliegende Bandrücken weist einen Bandrückenprofilabschnitt mit unterschiedlichen Bereichen auf. Gemäß den meisten in dieser Veröffentlichung gezeigten Ausführungsformen ist der Bandrückenprofilabschnitt wellenförmig ausgebildet, so dass mehrere gekrümmte Flächen aneinander anschließend angeordnet sind. Wie beispielsweise in Fig. 1A gut erkennbar ist, weist der Bandrückenprofilabschnitt einen Anstiegsbereich, darauf folgend einen Plateaubereich, darauf folgend einen Abstiegsbereich und darauf folgend einen Bodenbereich auf. Alle diese Bereiche sind gekrümmt ausgebildet. Der Anstiegsbereich und der Abstiegsbereich weisen einen übereinstimmenden Krümmungsradius auf.

Bei einer separaten Ausführungsform gemäß Fig. 10A der deutschen Patentschrift DE 697 17 699 T2 ist ein gerader Anstiegsbereich, daran anschließend ein gerader Plateaubereich, daran anschließend ein gerader Abstiegsbereich und daran anschließend ein gerader Bodenbereich vorhanden. Der Anstiegsbereich und der Abstiegsbereich besitzen die gleiche Länge und betragsmäßig den gleichen Neigungswinkel. Der Plateaubereich und der Bodenbereich besitzen die gleiche Länge, die auch der Summe der Längen des Anstiegsbereichs und des Abstiegsbereichs entspricht.

Ein Bandsägeblatt mit einem vergleichbaren Bandrückenprofilabschnitt ist auch aus der US-Patentschrift US4,423,653bekannt.

Die US-Patentschrift US4,423,653 offenbart ein Sägeband nach dem Oberbegriff des Anspruchs 1.

Das in der internationalen Patentanmeldung WO2014/007743A1offenbarte Bandsägeblatt weist einen ähnlichen Bandrückenprofilabschnitt auf. Hier entspricht der Anstiegsbereich nicht einer Geraden, sondern einer Kurve, und der Abstiegsbereich ist mit einer sehr viel höheren Länge gewählt als der Anstiegsbereich und weist dementsprechend einen geringeren Neigungswinkel auf.

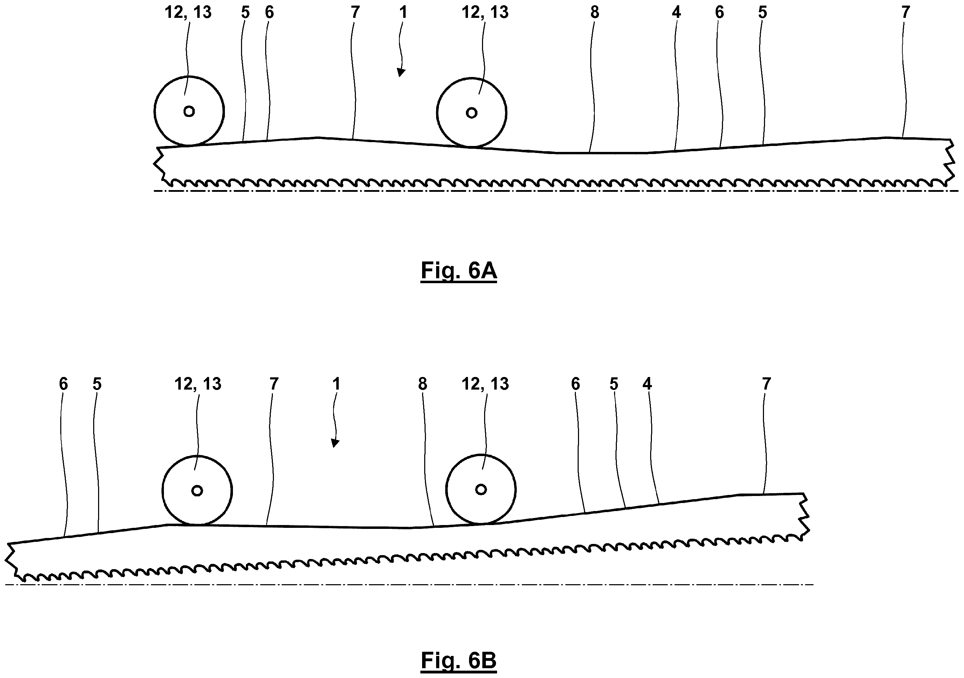

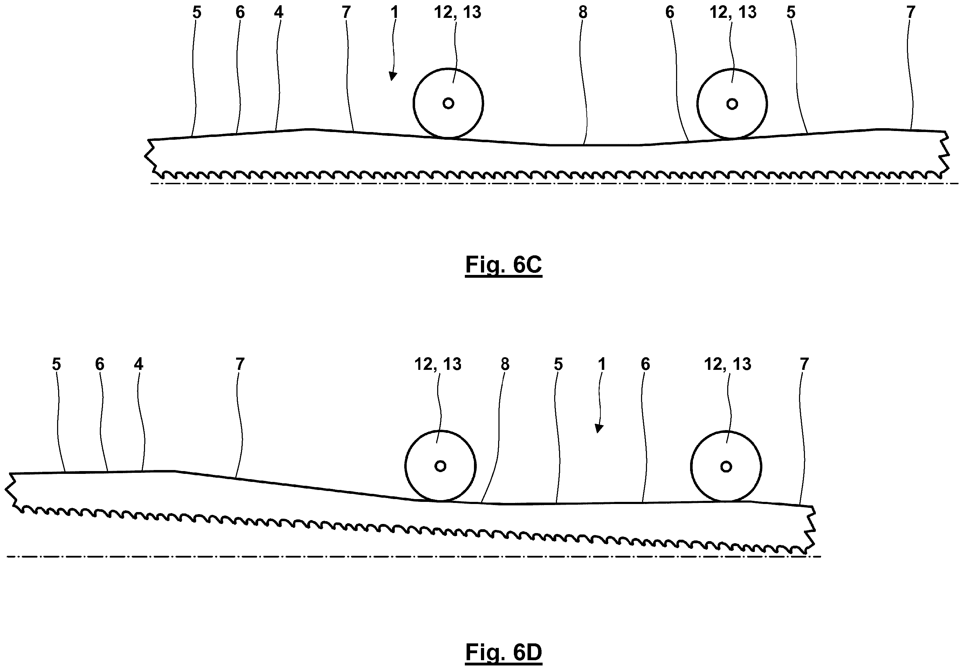

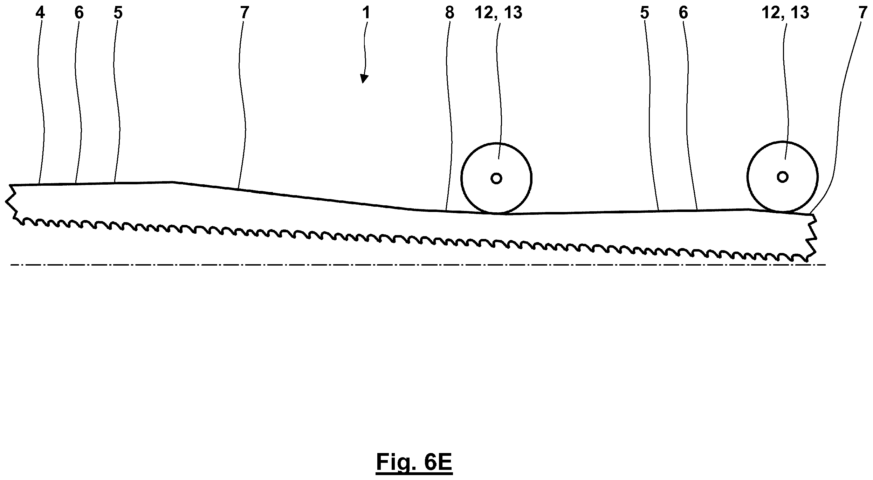

Aus der internationalen Patentanmeldung WO2006/019129A1und der japanischen Patentanmeldung JP2008 105176 aus derselben Patentfamilie sind verschiedene Ausführungsformen von Sägebändern mit einem Zahntragekörper und einer Mehrzahl von an dem Zahntragekörper angeordneten Zähnen bekannt. Gegenüberliegend zu den Zähnen ist ein Bandrücken mit einem Bandrückenprofilabschnitt angeordnet. Insbesondere in den Fig. 6, 11, 13 und 15 sind verschiedene Ausbildungen des Bandrückenprofilabschnitts unterschiedlicher Ausführungsformen des Sägebands gezeigt.

Aus der französischen Patentanmeldung FR 2 369 048 A1 ist ein Sägeband mit einem Zahntragekörper und einer Mehrzahl von an dem Zahntragekörper angeordneten Zähnen bekannt. Gegenüberliegend zu den Zähnen ist ein Bandrücken mit einem Bandrückenprofilabschnitt angeordnet. Der Bandrückenprofilabschnitt weist einen Abstiegsbereich, einen daran anschließenden Anstiegsbereich und einen wiederum daran anschließenden Abstiegsbereich auf.

### AUFGABE DER ERFINDUNG

Der Erfindung liegt die Aufgabe zugrunde, ein Sägeband bereitzustellen, welches gut zum Sägen schwer zerspanbarer Werkstoffe geeignet ist und dabei einem verringerten Verschleiß unterliegt.

### LÖSUNG

Die Aufgabe der Erfindung wird erfindungsgemäß mit den Merkmalen des unabhängigen Patentanspruchs 1 gelöst.

Weitere bevorzugte erfindungsgemäße Ausgestaltungen sind den abhängigen Patentansprüchen zu entnehmen.

### BESCHREIBUNG DER ERFINDUNG

Die Erfindung betrifft ein Sägeband mit einem Zahntragekörper und einer Mehrzahl von an dem Zahntragekörper angeordneten Zähnen. Das Sägeband weist weiterhin einen den Zähnen gegenüberliegenden Bandrücken mit einem Bandrückenprofilabschnitt auf. Der Bandrückenprofilabschnitt weist einen Anstiegsbereich, einen Abstiegsbereich und einen Ausgleichsbereich auf.

Der Bandrücken ist in dem Anstiegsbereich so profiliert ausgebildet, dass in Richtung des Endes des Anstiegsbereichs gesehen sein Abstand zu den Zähnen ansteigt. Der Bandrücken ist in dem Abstiegsbereich so profiliert ausgebildet, dass in Richtung des Endes des Abstiegsbereichs gesehen sein Abstand zu den Zähnen sinkt. Der Bandrücken ist in dem Ausgleichsbereich so unprofiliert und als Gerade ausgebildet, dass sein Abstand zu den Zähnen konstant ist.

Gemäß einer ersten Alternative ist der Abstiegsbereich an das Ende des Anstiegsbereichs anschließend angeordnet und der Ausgleichsbereich ist an das Ende des Abstiegsbereichs abschließend angeordnet. Der Ausgleichsbereich ist also ein vertieft angeordneter Bereich. Dabei weist der Ausgleichsbereich eine geringere Länge als der Anstiegsbereich und eine geringe Länge als der Abstiegsbereich auf. Der Ausgleichsbereich ist also ein vertieft angeordneter Bereich.

Gemäß einer zweiten Alternative ist der Anstiegsbereich an das Ende des Abstiegsbereichs anschließend angeordnet und der Ausgleichsbereich ist an das Ende des Anstiegsbereichs anschließend angeordnet. Dabei weist der Ausgleichsbereich eine geringere Länge als der Anstiegsbereich und eine geringere Länge als der Abstiegsbereich auf. Der Ausgleichsbereich ist also ein erhöht angeordneter Bereich.

Der Bandrücken des Sägebands ist in besonderer Weise profiliert ausgebildet, um dem Sägeband beim Sägen unterschiedliche Bewegungsrichtungen zu verleihen, die sich von der üblichen Bandlaufrichtung unterscheiden. Das Sägeband wird also beim Sägen abwechselnd im Uhrzeigersinn und gegen den Uhrzeigersinn gekippt. Diese Bewegung ergibt sich aus dem Kontakt der Führungselemente der Bandsägemaschine mit dem nicht-geraden Bandrückenprofilabschnitt des Sägebands.

Durch diese Kippbewegung entsteht ein diskontinuierlicher Vorschub und ein aggressives Schnittverhalten des Sägebands. Durch den Schnittdruck kann eine kaltverfestigte Zone in dem zu sägenden Werkstoff entstehen. Aufgrund des aggressiven Schnittverhaltens wird diese kaltverfestigte Zone nun unterschnitten bzw. untergraben. Der neue Bandrückenprofilabschnitt resultiert in schwankenden Schnittkräften. Die gemittelten Schnittkräfte können aber deutlich geringer als bei einem Sägeband mit einem geraden Bandrücken sein. Hierdurch wird der Verschleiß reduziert. Durch die Kippbewegung wird die Eingriffslänge des Sägebands reduziert, wodurch sich weniger Zähne gleichzeitig im Eingriff befinden, der Schnittkanal verkürzt und die Schnittkräfte reduziert werden. Hierdurch wird eine gute Oberflächenqualität mit verringerten Rauigkeitswerten und ein gute Geradheit des gesägten Werkstücks erreicht.

Der Anstiegsbereich und der Abstiegsbereich dienen einer Verkippung des Sägebands in entgegengesetzte Richtungen und werden daher auch als Kippbereiche bezeichnet. Der Ausgleichsbereich hingegen würde für sich genommen keine derartige Verkippung bewirken. Er ist aber so ausgebildet und angeordnet, dass er nicht allein bzw. mit einem anderen Ausgleichsbereich, sondern nur in Kombination mit dem Anstiegsbereich oder dem Abstiegsbereich zur Wirkung kommt. Dies bedeutet, dass eines der Führungselemente der Bandsägemaschine in dem Ausgleichsbereich und ein anderes Führungselement gleichzeitig in dem Anstiegsbereich oder dem Abstiegsbereich anliegt. Dadurch ergibt sich insgesamt die Kippbewegung des jeweiligen Kippbereichs - also des Anstiegsbereichs oder des Abstiegsbereichs. Der Ausgleichsbereich entkoppelt also den Anstiegsbereich und den Abstiegsbereich voneinander. Hierdurch verlangsamt sich die Kippbewegung zu ihrem Ende hin. Der Übergang zwischen dem Anstiegsbereich und dem Abstiegsbereich ist aufgrund des zwischengeschalteten Ausgleichsbereichs weniger abrupt, so dass es zu keinen schlagartig ansteigenden Zerspanungskräften kommt und somit eine verringerte Beanspruchung der Zähne erreicht wird.

Durch den Ausgleichsbereich wird die Wirksamkeit der Kippbewegung des Sägebands gesteigert, ohne die Höhendifferenz zwischen dem höchsten Punkt des Anstiegsbereichs und dem tiefsten Punkt des Abstiegsbereichs vergrößern zu müssen. Durch die geringere Schwächung des Sägebands wird die Bandbruchgefahr reduziert.

Der Ausgleichsbereich oder Entkopplungsbereich kann als abgesenkter Bereich ausgebildet sein - d. h. ein Bereich, der näher an den Zähnen des Sägebands angeordnet ist. Es kann sich aber auch alternativ um einen hervorgehobenen Bereich handeln. Es ist aber immer nur einer dieser beiden Bereiche vorhanden - d. h. der abgesenkte Ausgleichsbereich oder der hervorgehobene Ausgleichsbereich. Hierdurch wird sichergestellt, dass immer ein Kippbereich wirksam ist - d. h. mit einem Führungselement der Sägemaschine in Kontakt steht -, so dass die gewünschte Kippbewegung realisiert wird. Wenn zwei Nicht-Kippbereiche gleichzeitig wirksam wären, würde keine fortgesetzte Kippbewegung erreicht werden.

Bei einer bevorzugten Ausführungsform weist der Bandrückenprofilabschnitt genau die drei zuvor beschriebenen Abschnitte auf - d. h. nur den Anstiegsbereich, den Abstiegsbereich und den Ausgleichsbereich. Die Abschnitte sind in der Reihenfolge Anstiegsbereich - Abstiegsbereich - Ausgleichsbereich oder Anstiegsbereich - Ausgleichsbereich - Abstiegsbereich aneinander anschließend angeordnet, wobei sich dann wiederum der nächste Bandrückenprofilabschnitt mit den selben Bereichen anschließt.

Der Anstiegsbereich und der Abstiegsbereich sind vorzugsweise als Geraden ausgebildet, können aber auch als gekrümmte Flächen mit einem sehr großen Radius ausgebildet sein.

Der Ausgleichsbereich kann eine Länge von mehr als etwa 30 mm aufweisen. Hierdurch wird sichergestellt, dass der Ausgleichsbereich seine Pufferfunktion zwischen dem Anstiegsbereich und dem Abstiegsbereich bei üblichen Führungselementen von Bandsägemaschinen erbringen kann. Ein üblicher Durchmesser eines als Einzelrolle ausgebildeten Führungselements liegt etwa bei 30 mm. Bei einem üblichen als Doppelrolle ausgebildeten Führungselement liegt die Breite des durch die Doppelrolle gebildeten Rollenpakets bei etwa 70 mm.

Die Länge des Ausgleichsbereichs kann insbesondere mehr als etwa 50, 60, 80 oder 100 mm betragen. Die Länge ist dabei insbesondere kleiner als etwa 150 mm und insbesondere kleiner als etwa 120 mm. Die Länge kann zwischen etwa 60 und 100 mm oder zwischen etwa 70 bis 90 mm, insbesondere etwa 80 mm, betragen.

Der Anstiegsbereich kann einen betragsmäßig anderen Neigungswinkel als der Abstiegsbereich besitzen. Hierdurch ergibt sich auch dann eine gegenüber der üblichen Bandlaufrichtung gekippte Bewegungsrichtung des Sägebands, wenn sich gleichzeitig der Anstiegsbereich und der Abstiegsbereich im Eingriff mit dem jeweiligen Führungselement der Bandsägemaschine befinden. Diese Ausbildung wird auch als asymmetrische Profilierung bezeichnet. Es ist aber ebenfalls möglich, eine symmetrische Profilierung zu verwirklichen, bei der der Anstiegsbereich und der Abstiegsbereich einen betragsmäßig übereinstimmenden Neigungswinkel besitzen.

Der Anstiegsbereich und der Abstiegsbereich können jeweils unter einem Winkel zur Horizontalen (entspricht der üblichen geradlinigen Bandlaufrichtung) angeordnet sein, dessen Betrag kleiner als etwa 2° ist. Der Winkel kann insbesondere zwischen etwa 0,1° und 1,0° liegen. Bei einer asymmetrischen Profilierung beträgt die Differenz zwischen den Beträgen der beiden Winkel zwischen etwa 0,2° und 0,9°. Der Anstiegsbereich kann einen Winkel von etwa 1,0° oder weniger besitzen. Der Abstiegsbereich besitzt dann einen Winkel von etwa 0,4° oder weniger. Durch diese Ausbildung wird sichergestellt, dass einerseits die gewünschte Kippbewegung erreicht und andererseits gewährleistet wird, dass der Übergang zwischen dem kompensierenden Ausgleichsbereich und dem jeweiligen Kippbereich nicht zu abrupt ist und daher zu keinen schlagartigen Belastungen beim Sägen führt.

Der Abstiegsbereich kann eine mindestens doppelt so große Länge wie der Anstiegsbereich besitzen. Dementsprechend besitzt er also einen betragsmäßig geringeren Neigungswinkel als der Anstiegsbereich. In dieser Weise lässt sich gut eine asymmetrische Profilierung des Bandrückenprofilabschnitts realisieren.

Das Sägeband kann eine ganzzahlige Mehrzahl von Bandrückenprofilabschnitten aufweisen. Beim Umlauf des Sägebands durch die Bandsägemaschine ergibt sich somit eine regelmäßige Gesamtbewegung, die sich aus der durch den Bandrückenprofilabschnitt definierten Teilbewegung zusammensetzt. Die Bandrückenprofilabschnitte werden so dimensioniert, dass ihre ganzzahlige Anordnung entlang der Länge des Sägebands möglich ist. Zur Anpassung an die jeweilige Bandlänge wird die Länge der Bandrückenprofilabschnitte variiert. Die Bandlänge ist vorzugsweise ein ganzzahliges Vielfaches der Länge des Bandrückenprofilabschnitts. Wenn alle Bandrückenprofilabschnitte übereinstimmend ausgebildet sind, wird dies als feste Teilung bezeichnet.

Es ist aber ebenfalls möglich, eine variable Teilung vorzusehen, bei der das Sägeband mindestens zwei Bandrückenprofilabschnitte mit unterschiedlichen Längen aufweist. Diese variable Teilung kann in unterschiedlicher Weise realisiert werden, wobei dies insbesondere dadurch erfolgt, dass die Länge des jeweils längeren Kippbereichs - d. h. des Anstiegsbereichs oder des Abstiegsbereichs - verlängert bzw. verkürzt wird.

Der Bandrückenprofilabschnitt kann so hergestellt sein, dass die dadurch entstandenen Bearbeitungsriefen längs zum Sägeband verlaufen. Sie erstrecken sich also parallel zur üblichen ungekippten Bandlaufrichtung. Hierdurch wird die Bandbruchgefahr erheblich reduziert. Der Bandrückenprofilabschnitt kann insbesondere durch Fräsen oder Schleifen hergestellt werden.

Die Übergänge zwischen den unterschiedlichen Bereichen des Bandrückenprofilabschnitts können durch relativ große Radien - insbesondere Radien von etwa 50 mm oder mehr - gebildet werden, um Kerbwirkungen zu reduzieren, einen weicheren Lauf des Sägebands zu erreichen und die Dauerlaufeigenschaften insgesamt zu verbessern. Hierdurch werden auch die Geräuschemissionen beim Sägen wesentlich reduziert.

Der Zahntragekörper kann an seiner den Zähnen zugewandten Seite - abgesehen von den Zähnen - unprofiliert ausgebildet sein. Anders gesagt wird also die Zahnseite insbesondere nicht profiliert ausgebildet, sondern weist hinsichtlich ihrer Grundgestalt eine übliche gerade Ausbildung auf.

Die Zähne können in einer sich entlang des Zahntragekörpers wiederholenden Gruppe angeordnet sein, wobei die Gruppe folgendes aufweist: einen Oberflächenzahn C3 mit der größten Breite und der geringsten Höhe in der Gruppe und zwei Leistungszähne C1, C2 mit größeren Höhen und geringeren Breiten als der Oberflächenzahn C3.

Dabei kann der Leistungszahn C1 mit der größten Höhe und der geringsten Breite mehr als einmal in der Gruppe und/oder der Oberflächenzahn C3 mehr als einmal in der Gruppe vorkommen. Insbesondere kann die Gruppe zweimal den Leistungszahn C1, zweimal den Oberflächenzahn C3 und nur einmal den Leistungszahn C2 aufweisen, insbesondere in der Reihenfolge C1-C3-C1-C2-C3. Diese spezielle Geometrie ist an die neue Ausgestaltung des Bandrückenprofilabschnitts angepasst.

Wenn eine aus dem Stand der Technik bekannte übliche Zahngruppe bei einem Sägeband mit dem neuen Bandrückenprofilabschnitt angewendet wird, hat sich gezeigt, dass die Zähne C1 und C3 besonders stark an der Zerspanung teilnehmen und entsprechend schneller verschleißen. Der Zahn C2 hingegen nimmt nur wenig an der Zerspanung teil. Die oberhalb beschriebene neue Fünfer-Geometrie ermöglicht es nun, die Zähne C1 und C3 vermehrt anzuordnen, wodurch der Verschleiß erheblich reduziert und die Lebensdauer des Sägebands signifikant erhöht wird.

Mindestens ein Teil der Zähne kann einen Spanwinkel von etwa 10° oder mehr, insbesondere etwa 12° oder mehr, und/oder einen Freiwinkel von etwa 18° oder mehr, insbesondere etwa 20° oder mehr, aufweisen. Hierdurch ergibt sich eine Verschlankung des Schneidkeils, der dadurch aggressiver wird. Hierdurch werden die Schnittkräfte reduziert und es wird einer Kaltverfestigung des Materials des zu sägenden Werkstücks entgegengewirkt. Durch den vergrößerten Spanwinkel muss weniger Spanumformarbeit verrichtet werden. Durch den vergrößerten Freiwinkel werden die Reibkräfte im Zerspanprozess reduziert.

Vorteilhafte Weiterbildungen der Erfindung ergeben sich aus den abhängigen Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Bandrückenprofilabschnitt die Rede ist, ist dies so zu verstehen, dass genau ein Bandrückenprofilabschnitt, zwei Bandrückenprofilabschnitte oder mehr Bandrückenprofilabschnitte vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erste Seitenansicht einer ersten beispielhaften Ausführungsform des neuen Sägebands.
- **Fig. 2**: zeigt eine zweite Seitenansicht des Sägebands gemäß Fig. 1 in einem kleineren Maßstab.
- **Fig. 3**: zeigt eine dritte Seitenansicht des Sägebands gemäß Fig. 1 in einer gelösten Darstellung.
- **Fig. 4**: zeigt eine erste Seitenansicht einer zweiten beispielhaften Ausführungsform des neuen Sägebands.
- **Fig. 5**: zeigt eine zweite Seitenansicht des Sägebands gemäß Fig. 4 in einem kleineren Maßstab.
- **Fig. 6**: zeigt verschiedene Positionen des neuen Sägebands an Führungselementen einer Sägemaschine.
- **Fig. 7**: zeigt verschiedene Positionen des neuen Sägebands an Führungselementen einer Sägemaschine.
- **Fig. 8**: zeigt eine Position des neuen Sägebands an Führungselementen einer Sägemaschine.
- **Fig. 9**: zeigt eine Position des neuen Sägebands an Führungselementen einer Sägemaschine.
- **Fig. 10**: zeigt eine erste Seitenansicht einer weiteren beispielhaften Ausführungsform des neuen Sägebands.
- **Fig. 11**: zeigt eine zweite Seitenansicht des Sägebands gemäß Fig. 10 in einem kleineren Maßstab.
- **Fig. 12**: zeigt den verzahnten Teil des neuen Sägebands in einer Projektion in Bandlaufrichtung.

### FIGURENBESCHREIBUNG

**Fig. 1-12** zeigen verschiedene Ansichten von Ausschnitten einer beispielhaften Ausführungsformen eines neuen Sägebands 1.

Die Darstellungen sind maßstabsgerecht, so dass die geometrischen Beziehungen zwischen den einzelnen Elementen des Sägebands 1 aus den Zeichnungen entnehmbar sind. Dies gilt mit einer Einschränkung für den in den Fig. 1-11 dargestellten Bandrückenprofilabschnitt. Dieser ist zur besseren Erkennbarkeit der Profilierung des Bandrückens in der in den Zeichnungen dargestellten Richtung senkrecht zur Bandlaufrichtung (d. h. der üblichen Y-Richtung) um den Maßstab 15:1 vergrößert dargestellt. Diese Vergrößerung betrifft nur den profilierten Bereich des Bandrückens und somit nicht den Abstand zwischen dem tiefsten Punkt des Bandrückens und den Zähnen.

**Fig. 1** zeigt einen Ausschnitt aus dem langgestreckten Sägeband 1, was durch entsprechende Abbruchlinien im linken und im rechten Bereich der Darstellung der Fig. 1 kenntlich gemacht ist. Das Sägeband 1 weist einen Zahntragekörper 2 und eine Mehrzahl von an dem Zahntragekörper 2 angeordneten Zähnen 3 auf. Das Sägeband 1 weist weiterhin einen den Zähnen 3 gegenüberliegenden Bandrücken 4 mit einem Bandrückenprofilabschnitt 5 auf.

Der Bandrückenprofilabschnitt 5 weist einen Anstiegsbereich 6 auf. In dem Anstiegsbereich 6 ist der Bandrücken 4 so profiliert ausgebildet, dass sein Abstand zu den Zähnen 3 ansteigt. Der Bandrückenprofilabschnitt 5 weist weiterhin im Anschluss an das obere Ende 9 des Anstiegsbereichs 6 einen Abstiegsbereich 7 auf. In dem Abstiegsbereich 7 ist der Bandrücken 4 so profiliert ausgebildet, dass sein Abstand zu den Zähnen 3 sinkt. An das untere Ende 10 des Abstiegsbereichs 7 schließt dann ein Ausgleichsbereich 8 an. In dem Ausgleichsbereich 8 ist der Bandrücken 4 so unprofiliert und als Gerade ausgebildet, dass sein Abstand zu den Zähnen 3 konstant ist.

Der Ausgleichsbereich 8 erstreckt sich dabei bis zu seinem Ende 11 in der Richtung, die der üblichen geradlinigen Bandlaufrichtung eines Sägebands mit einem geraden Bandrücken entspricht. Der Anstiegsbereich 6 hingegen ist unter einem Neigungswinkel β_{Anstieg} gegenüber der üblichen Bandlaufrichtung geneigt angeordnet. Der Abstiegsbereich 7 ist unter einem Winkel β_{Abstieg} gegenüber der geraden Bandlaufrichtung geneigt angeordnet. Wegen der oben beschriebenen teilweisen Vergrößerung sind diese Winkel tatsächlich wesentlich kleiner.

In dem in Fig. 1 dargestellten Ausführungsbeispiel handelt es sich um eine asymmetrische Profilierung, bei der der Neigungswinkel β_{Anstieg} betragsmäßig deutlich größer ist als der Neigungswinkel β_{Abstieg}. Dementsprechend ist die parallel zur normalen Bandlaufrichtung gemessene Länge des Abstiegsbereichs 7 auch wesentlich größer als die entsprechende Länge des Anstiegsbereichs 6. Eine noch geringere Länge besitzt der Ausgleichsbereich 8.

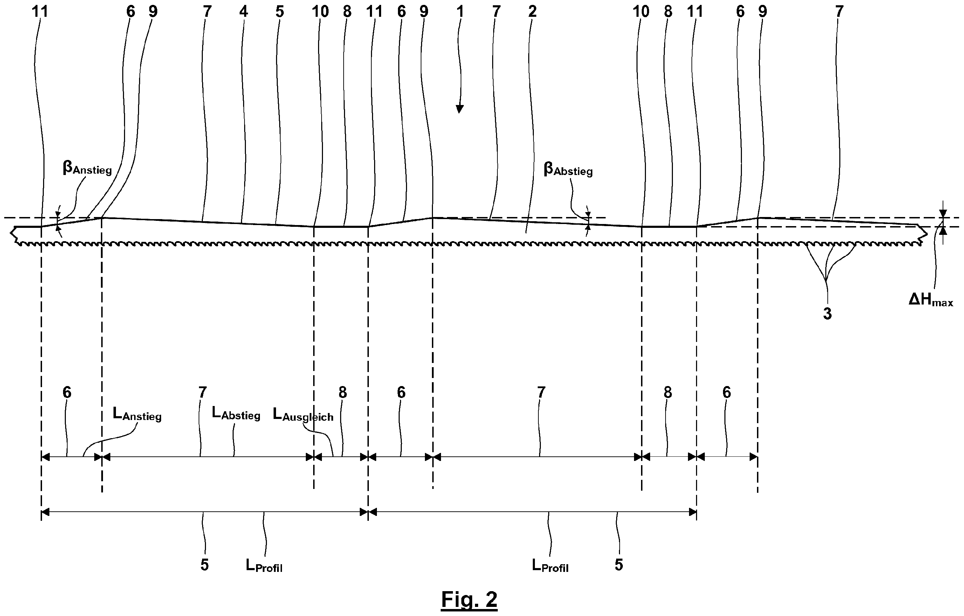

**Fig. 2** zeigt eine weitere Ansicht des ersten Ausführungsbeispiels des Sägebands 1 gemäß Fig. 1, wobei hier der Maßstab so gewählt wurde, dass zwei Profilabschnitte 5 vollständig dargestellt sind.

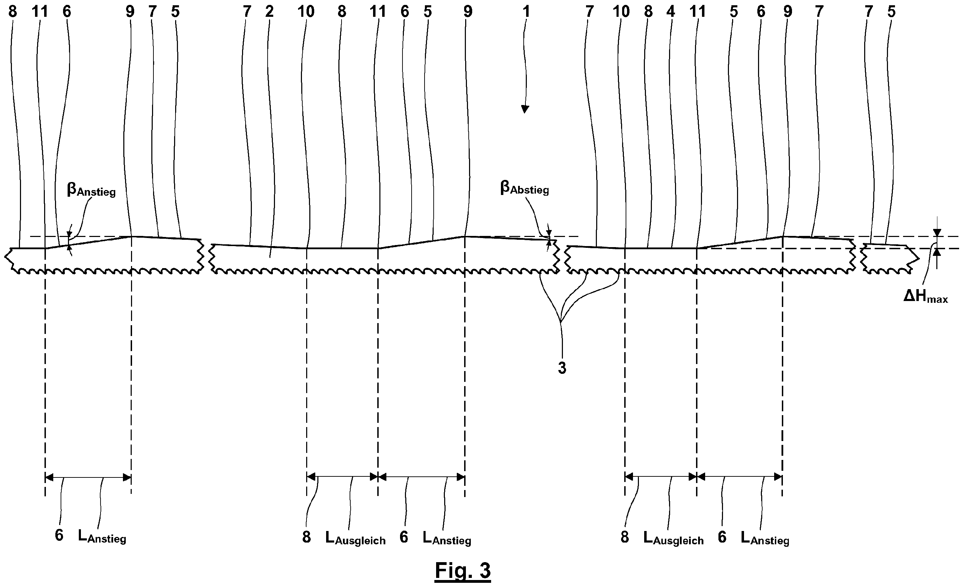

**Fig. 3** zeigt eine weitere Ansicht des ersten Ausführungsbeispiels des Sägebands 1 gemäß Fig. 1, wobei hier eine teilweise gelöste Darstellung verwendet wurde, so dass erkennbar ist, dass mehr als zwei Profilabschnitte 5 entlang der Länge des Sägebands 1 angeordnet sind.

In der folgenden Tabelle sind die entsprechenden Werte dieses Ausführungsbeispiels zusammengefasst angegeben:

### Ausführungsbeispiel 1

| **Größe** | **Einheit** | **Wert (Betrag)** |
|---|---|---|
| Neigungswinkel β_{Anstieg} | ° | 0,69 |
| Neigungswinkel β_{Abstieg} | ° | 0,21 |
| Länge Anstiegsbereich L _{Anstieg} | mm | 100 |
| Länge Abstiegsbereich L _{Abstieg} | mm | 320 |
| Länge Ausgleichsbereich L_{Ausgleich} | mm | 80 |
| Länge Bandrückenprofilabschnitt L _{Profil} | mm | 500 |
| maximale Höhendifferenz ΔHₘₐₓ | mm | 1,2 |

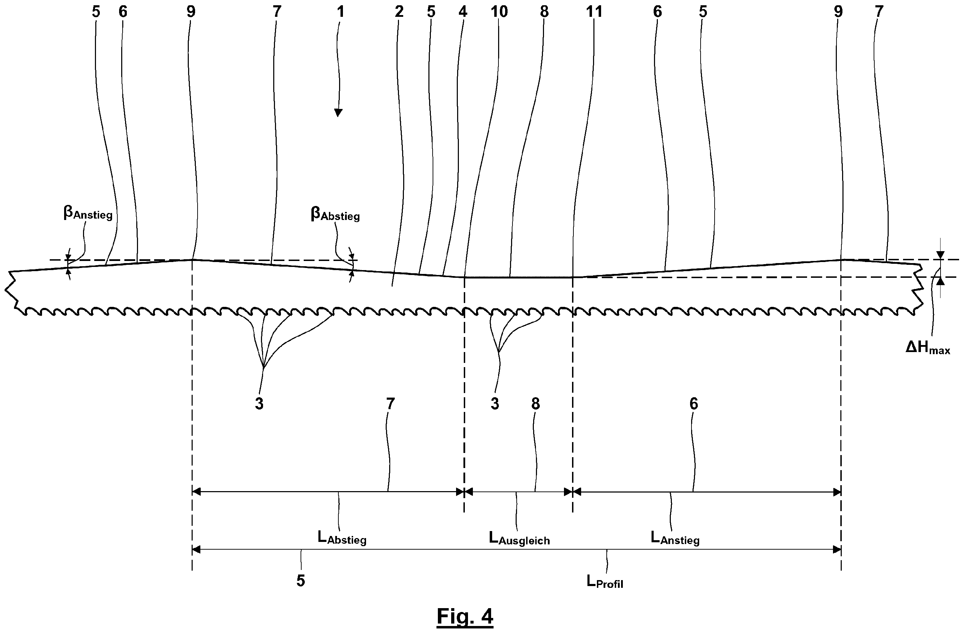

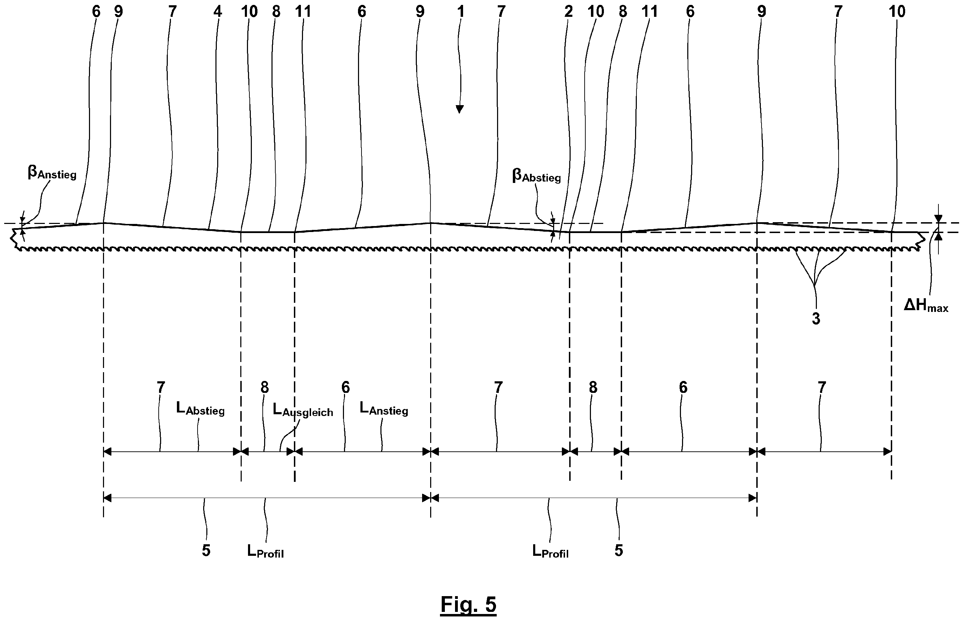

Die **Fig. 4** **und** **5** zeigen den Fig. 1 und 2 entsprechende Darstellungen einer zweiten beispielhaften Ausführungsform des neuen Sägebands 1. In diesem Fall weist der Bandrücken 4 einen symmetrisch profilierten Bandrückenprofilabschnitt 5 auf. Dies bedeutet, dass der Anstiegsbereich 6 und der Abstiegsbereich 7 übereinstimmende Längen und betragsmäßig übereinstimmende Neigungswinkel besitzen.

In der folgenden Tabelle sind die entsprechenden Werte dieses Ausführungsbeispiels zusammengefasst angegeben:

### Ausführungsbeispiel 2

| **Größe** | **Einheit** | **Wert (Betrag)** |
|---|---|---|
| Neigungswinkel β_{Anstieg} | ° | 0,33 |
| Neigungswinkel β_{Abstieg} | ° | 0,33 |
| Länge Anstiegsbereich L_{Anstieg} | mm | 210 |
| Länge Abstiegsbereich L_{Abstieg} | mm | 210 |
| Länge Ausgleichsbereich L _{Ausgleich} | mm | 80 |
| Länge Bandrückenprofilabschnitt L _{Profil} | mm | 500 |
| maximale Höhendifferenz ΔHₘₐₓ | mm | 1,2 |

Die **Fig. 6A-6E** zeigen die neuartige Bewegung des Sägebands 1 in einer Sägemaschine. Die Sägemaschine ist für sich genommen üblich aufgebaut, so dass eine detailliertere Darstellung und Beschreibung nicht erforderlich ist. In diesem Fall weist das Sägeband 1 einen symmetrisch profilierten Bandrückenprofilabschnitt 5 auf. Bei dem Ausgleichsbereich 8 handelt es sich um einen vertieften Bereich.

Die Sägemaschine weist Führungselemente 12 auf, die hier jeweils als Einzelrolle 13 ausgebildet sind. Über die Führungselemente 12 wird der Bandrücken 4 und damit das Sägeband 1 im Bereich des zu sägenden Werkstücks (nicht dargestellt) geführt. Das zu sägende Werkstück befindet sich dabei zwischen den Führungselementen 12. Dabei bewegt sich das Sägeband 1 in den Darstellungen der Fig. 6 nach links, wobei die normalerweise übliche Bandlaufrichtung bei einem Sägeband ohne Profilierung durch die strichpunktierte Linie kenntlich gemacht ist.

Durch den Kontakt der Führungselemente 12 mit dem profilierten Bandrücken 4 ergibt sich die nicht-gerade Bandlaufrichtung des Sägebands 1.

In der in **Fig. 6A** dargestellten Position befindet sich das linke Führungselement 12 im Anstiegsbereich 6 und das rechte Führungselement 12 im Bereich des Abstiegsbereichs 7. Es ist hier eine besondere Position dargestellt, in der beide Führungselemente 12 jeweils einen Teil der Bereiche 6, 7 kontaktieren, der den gleichen Abstand zu den Zähnen 3 besitzt. Hierdurch ergibt sich die Besonderheit, dass das Sägeband 1 zur üblichen Bandlaufrichtung nicht verkippt ist.

In **Fig. 6B** ist nun eine im Rahmen der Weiterbewegung des Sägebands 1 folgende verkippte Position dargestellt. Das linke Führungselement 12 befindet sich am Anfang des Abstiegsbereichs 7. Das rechte Führungselement 12 befindet sich am Anfang des Anstiegsbereichs 6 des folgenden Bandrückenprofilabschnitts 5. Da der Bandrücken 4 in dem Bereich des Anstiegsbereichs 6, in dem sich das rechte Führungselement 12 befindet, einen geringeren Abstand zu den Zähnen 3 aufweist bzw. im Vergleich zu dem anderen Bereich, in dem sich das linke Führungselement 12 befindet, tiefer angeordnet ist, erfolgt eine Verschwenkung oder Verkippung des Sägebands 1 entgegen der Uhrzeigerrichtung.

Diese verkippte Position wird grundsätzlich beibehalten, schwächt sich aber ab, bis die in **Fig. 6C** dargestellte Position erreicht wird. Hier befindet sich das linke Führungselement 12 in einem etwa mittleren Bereich des Abstiegsbereichs 7 und das rechte Führungselement 12 in einem etwa mittleren Bereich des folgenden Anstiegsbereichs 6. Diese Position stellt das Ende der gegen den Uhrzeigersinn verkippten Position dar. Die Zähne 3 (soweit sie gleich hoch sind) befinden sich also alle im gleichen Abstand zu der strichpunktierten Linie.

Bei der Weiterbewegung des Sägebands 1 entsteht nun eine im Uhrzeigersinn verkippte Position, deren Maximum in **Fig. 6D** dargestellt ist. Das linke Führungselement 12 befindet sich dabei im Ausgleichsbereich 8. Das rechte Führungselement 12 befindet sich am Ende des folgenden Anstiegsbereichs 6.

Bei einer fortgesetzten Bewegung des Sägebands 1 bleibt diese im Uhrzeigersinn verkippte Stellung grundsätzlich erhalten, schwächt sich aber ab, wie dies in **Fig. 6E** gezeigt ist. Hier befindet sich das linke Führungselement 12 in dem Ausgleichsbereich 8 und das rechte Führungselement 12 am Beginn des folgenden Abstiegsbereichs 7.

Bei einer fortgesetzten Bewegung des Sägebands 1 wird dann der Zyklus abgeschlossen und wiederum die in Fig. 6A gezeigte Position erreicht. Anschließend beginnt der nächste Zyklus.

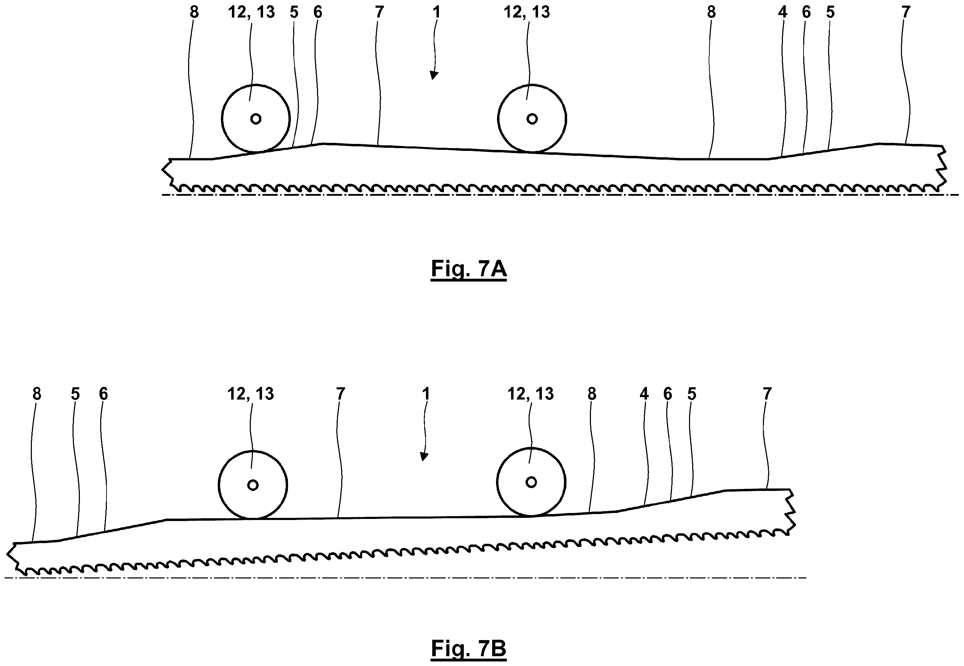

Die **Fig. 7A-7E** zeigen die neuartige Bewegung einer anderen beispielhaften Ausführungsform des Sägebands 1 in einer Sägemaschine. In diesem Fall weist das Sägeband 1 einen Bandrücken 4 mit einem asymmetrisch profilierten Bandrückenprofilabschnitt 5 auf. Bei dem Ausgleichsbereich 8 handelt es sich wieder um einen vertieften Bereich. Die Führungselemente 12 sind wiederum jeweils als Einzelrolle 13 ausgebildet.

In der in **Fig. 7A** gezeigten Position kontaktiert das linke Führungselement 12 den Bandrücken 4 des Sägebands 1 in etwa in der Mitte des Anstiegsbereichs 6. Das rechte Führungselement 12 kontaktiert in etwa die Mitte des Abstiegsbereichs 7. Hierdurch ergibt sich insgesamt eine ungekippte Stellung des Sägebands 1.

Bei einer Weiterbewegung des Sägebands 1 nach links erfolgt dann eine Verkippung des Sägebands 1 gegen den Uhrzeigersinn. Die maximal verkippte Position ist in **Fig. 7B** dargestellt. Dabei kontaktiert das linke Führungselement 12 den Abstiegsbereich 7 und das rechte Führungselement 12 den Ausgleichsbereich 8.

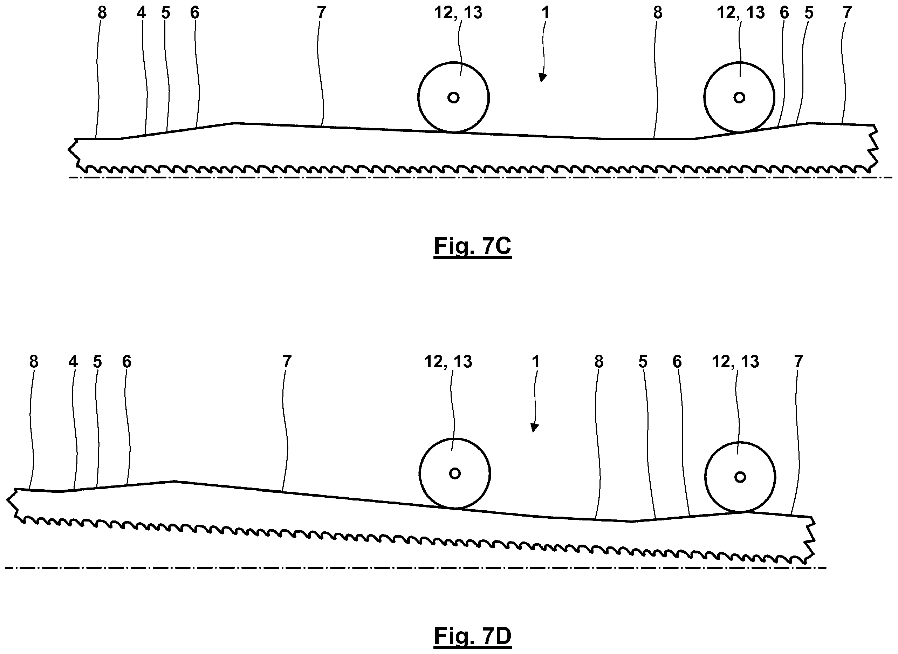

Bei einer Weiterbewegung des Sägebands 1 nach links wird dann die gegen den Uhrzeigersinn verkippte Position weiter zurückgeführt, bis die ausgeglichene Position erreicht wird, wie diese in **Fig. 7C** dargestellt ist. Dabei befindet sich das linke Führungselement 12 in etwa in der Mitte des Abstiegsbereichs 7 und das rechte Führungselement 12 in etwa der Mitte des folgenden Anstiegsbereichs 6.

Bei einer Weiterbewegung des Sägebands 1 wird dann eine Verkippung im Uhrzeigersinn erreicht. Die maximal verkippte Position ist in **Fig. 7D** dargestellt. Dabei befindet sich das linke Führungselement 12 in dem Abstiegsbereich 7 und das rechte Führungselement 12 am oberen Ende des folgenden Anstiegsbereichs 6.

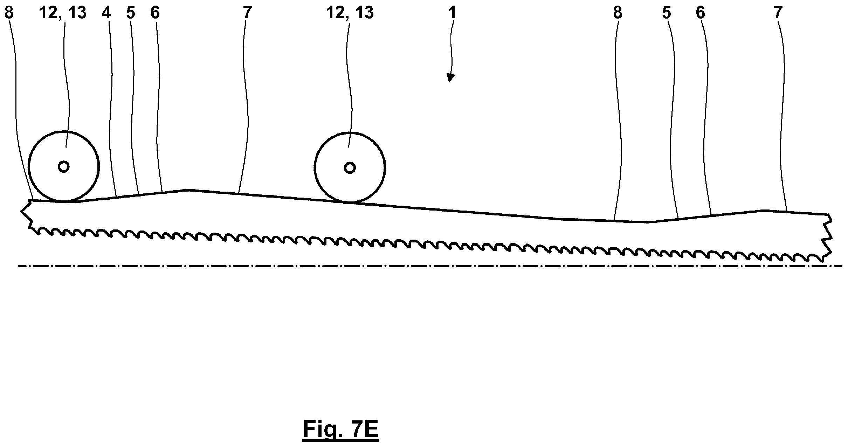

Bei einer Weiterbewegung des Sägebands 1 nach links ergibt sich dann eine Zurückführung der gekippten Position, so dass u. a. die in **Fig. 7E** dargestellte Position eingenommen wird. Dabei befindet sich das linke Führungselement 12 in dem Ausgleichsbereich 8 und das rechte Führungselement 12 in dem Abstiegsbereich 7.

Bei einer fortgesetzten Bewegung des Sägebands 1 wird dann der Zyklus abgeschlossen und wieder die in Fig. 7A gezeigte Position erreicht. Anschließend beginnt der nächste Zyklus.

Bei einem weiteren hier nicht dargestellten Ausführungsbeispiel des neuen Sägebands 1 besitzt der asymmetrische Bandrückenprofilabschnitt 5 eine andere Gesamtlänge und der Anstiegsbereich 6 und der Abstiegsbereich 7 weisen jeweils eine andere Länge auf. Andere Ausbildungen sind zur Anpassung an die Bandlänge ebenfalls möglich.

In der folgenden Tabelle sind die entsprechenden Werte dieses Ausführungsbeispiels zusammengefasst angegeben:

### Ausführungsbeispiel 3

| **Größe** | **Einheit** | **Wert (Betrag)** |
|---|---|---|
| Neigungswinkel β_{Anstieg} | ° | 0,46 |
| Neigungswinkel β_{Abstieg} | ° | 0,13 |
| Länge Anstiegsbereich L _{Anstieg} | mm | 150 |
| Länge Abstiegsbereich L_{Abstieg} | mm | 520 |
| Länge Ausgleichsbereich L _{Ausgleich} | mm | 80 |
| Länge Bandrückenprofilabschnitt L _{Profil} | mm | 750 |
| maximale Höhendifferenz ΔHₘₐₓ | mm | 1,2 |

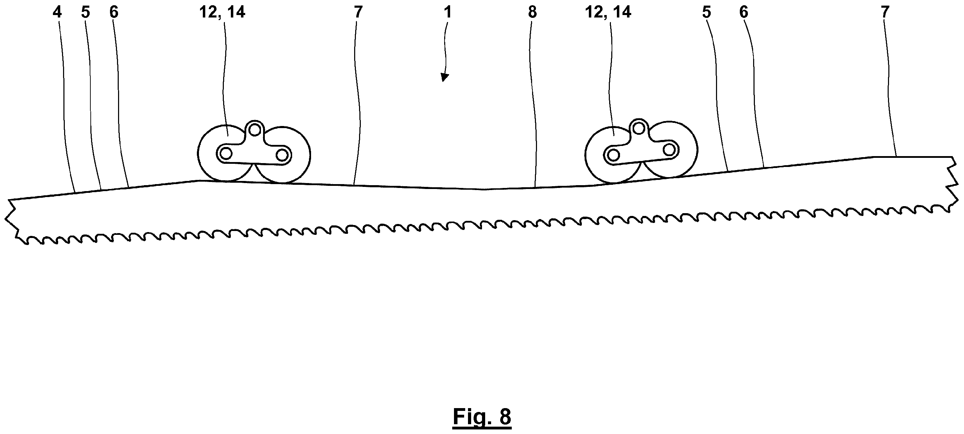

In der **Fig. 8** ist ein asymmetrisch profiliertes Sägeband 1 gezeigt, welches hier in einer nicht näher dargestellten Bandsägemaschine mit den als Doppelrollen 14 ausgebildeten Führungselementen 12 angeordnet ist. In der dargestellten Position befindet sich die linke Doppelrolle 14 in Kontakt mit dem Beginn des Abstiegsbereichs 7. Die rechte Doppelrolle 14 kontaktiert den Beginn des nach rechts nächsten Anstiegsbereichs 6, so dass sich insgesamt eine gegen den Uhrzeigersinn verkippte Stellung ergibt.

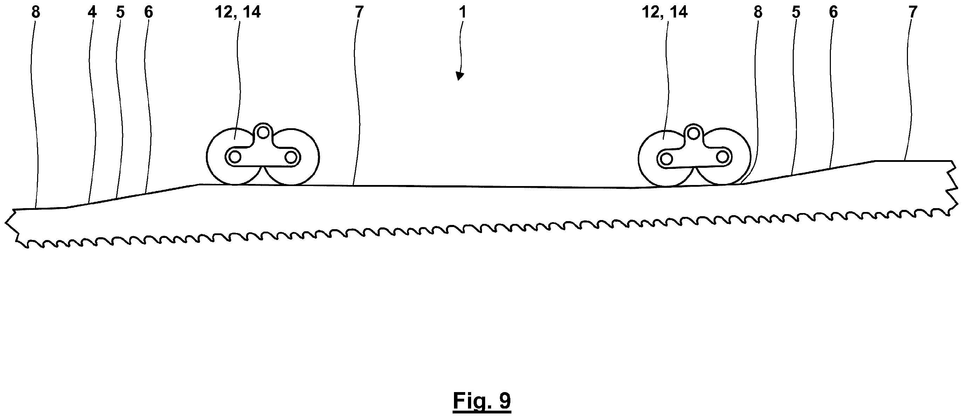

Das in **Fig. 9** gezeigte Sägeband 1 weist einen asymmetrisch profilierten Bandrückenprofilabschnitt 5 auf. In der gezeigten Stellung befindet sich die linke Doppelrolle 14 am Anfang des Abstiegsbereichs 7 und die rechte Doppelrolle 14 in dem anschließenden Ausgleichsbereich 8.

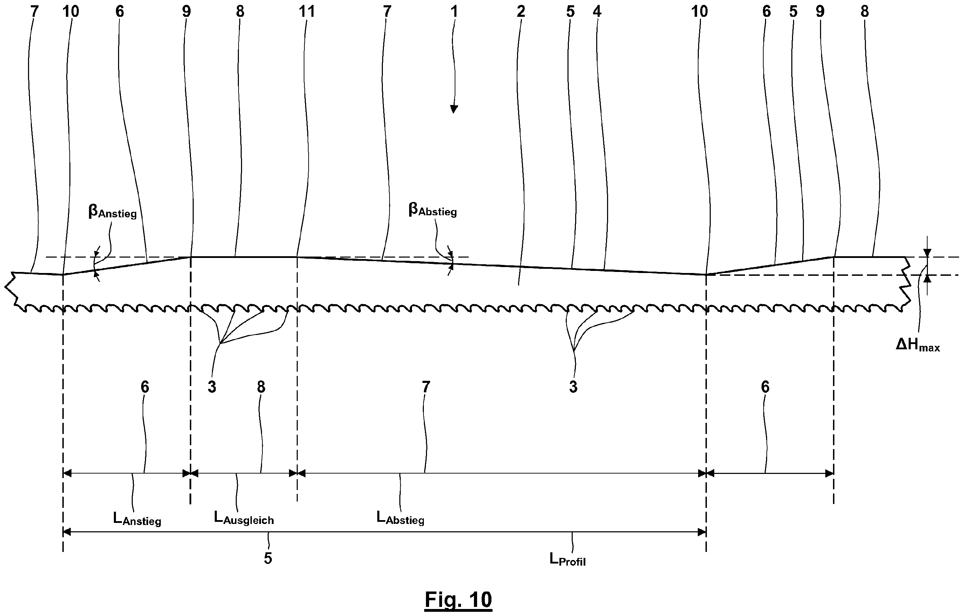

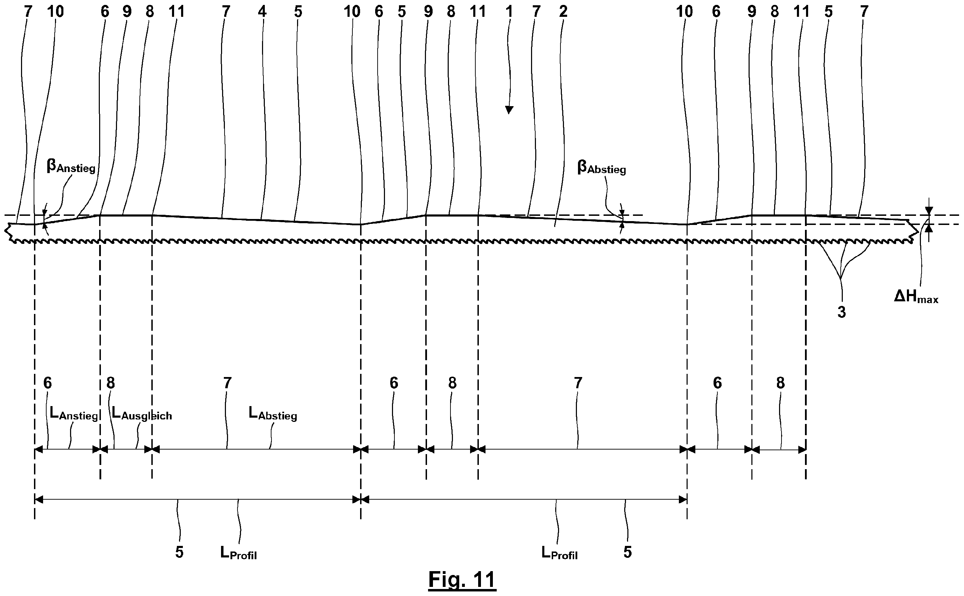

Das in den **Fig. 10** **und** **11** gezeigte Sägeband 1 weist wiederum einen asymmetrisch profilierten Bandrückenprofilabschnitt 5 auf. In diesem Fall ist der Ausgleichsbereich 8 aber nicht als vertiefter Bereich, sondern als hervorgehobener Bereich ausgebildet. Er schließt sich daher an das Ende 9 des Anstiegsbereichs 6 an. Auch mit dieser Ausführungsform wird die gewünschte wechselnde Kippbewegung des Sägebands 1 erreicht.

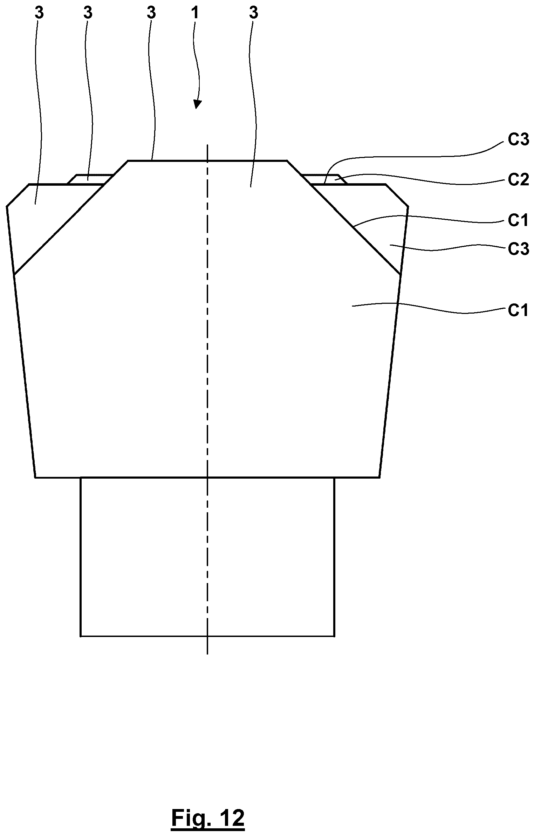

**Fig. 12** zeigt eine beispielhafte Ausbildung der Zähne 3 des Sägebands 1 in einer Projektion in der normalen geradlinigen Bandlaufrichtung. Es ist eine Zahngruppe gezeigt, die mehrfach entlang der Länge des Sägebands 1 vorhanden ist.

Die Zahngruppe weist einen Leistungszahn C1 mit der größten Höhe und der geringsten Breite auf. Dieser Leistungszahn C1 ist zweimal in der Gruppe enthalten, wobei der in der Projektion weiter hinten liegende Leistungszahn C1 wegen der Überdeckung durch den weiter vorne liegenden Leistungszahn C1 in der Zeichnungsdarstellung nicht erkennbar ist. Hinter dem vorderen Leistungszahn C1 ist der Oberflächenzahn C3 angeordnet. Dieser weist die größte Breite und die geringste Höhe in der Gruppe auf. Als nächstes folgt der weitere Leistungszahn C1. Darauf folgt ein weiterer Leistungszahn C2, der die zweitgrößte Höhe und die zweitgrößte Breite der Zähne 3 aufweist. Danach folgt erneut der Oberflächenzahn C3, der zweimal in der Gruppe enthalten ist, wobei der in der Projektion weiter hinten liegende Oberflächenzahn C3 wegen der Überdeckung durch den weiter vorne liegenden Oberflächenzahn C3 in der Zeichnungsdarstellung nicht erkennbar ist.

Insgesamt ergibt sich somit die Zahnfolge C1-C3-C1-C2-C3. Diese Zahnfolge ist dann wiederholt entlang der Länge des Sägebands 1 angeordnet.

Wie in Fig. 12 weiterhin erkennbar ist, sind die Zähne 3 als gefaste und ungeschränkte Zähne 3 ausgebildet. Der Fasenwinkel beträgt hier 45°, könnte aber auch einen anderen Wert besitzen. Die Zähne 3 können aber auch ungefast ausgebildet sein.

Es versteht sich, dass auch andere Ausbildungen und Anordnungen der Zähne 3 und der Zahngruppe des Sägebands 1 möglich sind.

### BEZUGSZEICHENLISTE

- 1: Sägeband
- 2: Zahntragekörper
- 3: Zahn
- 4: Bandrücken
- 5: Bandrückenprofilabschnitt
- 6: Anstiegsbereich
- 7: Abstiegsbereich
- 8: Ausgleichsbereich
- 9: Ende
- 10: Ende
- 11: Ende
- 12: Führungselement
- 13: Einzelrolle
- 14: Doppelrolle

## Patentansprüche

1. Sägeband (1), mit
einem Zahntragekörper (2),
einer Mehrzahl von an dem Zahntragekörper (2) angeordneten Zähnen (3), und
einem den Zähnen (3) gegenüberliegenden Bandrücken (4) mit einem Bandrückenprofilabschnitt (5), wobei der Bandrückenprofilabschnitt (5) die folgenden Bereiche aufweist:
einen Anstiegsbereich (6), in dem der Bandrücken (4) so profiliert ausgebildet ist, dass in Richtung des Endes des Anstiegsbereichs (6) gesehen sein Abstand zu den Zähnen (3) ansteigt,
einen Abstiegsbereich (7), in dem der Bandrücken (4) so profiliert ausgebildet ist, dass in Richtung des Endes des Abstiegsbereichs (7) gesehen sein Abstand zu den Zähnen (3) sinkt,
einen Ausgleichsbereich (8), in dem der Bandrücken (4) so unprofiliert und als Gerade ausgebildet ist, dass sein Abstand zu den Zähnen (3) konstant ist, **dadurch gekennzeichnet, dass**
a) der Abstiegsbereich (7) an das Ende des Anstiegsbereichs (6) anschließend angeordnet ist und der Ausgleichsbereich (8) an das Ende des Abstiegsbereich (7) anschließend angeordnet ist, wobei der Ausgleichsbereich (8) eine geringere Länge (L_{Ausgleich}) als der Anstiegsbereich (6) und eine geringere Länge (L_{Ausgleich}) als der Abstiegsbereich (7) besitzt, oder
b) der Anstiegsbereich (6) an das Ende des Abstiegsbereichs (7) anschließend angeordnet ist und der Ausgleichsbereich (8) an das Ende des Anstiegsbereichs (6) anschließend angeordnet ist, wobei der Ausgleichsbereich (8) eine geringere Länge (L_{Ausgleich}) als der Anstiegsbereich (6) und eine geringere Länge (L_{Ausgleich}) als der Abstiegsbereich (7) besitzt.

2. Sägeband (1) nach Anspruch 1, **dadurch gekennzeichnet, dass**
der Bandrückenprofilabschnitt (5) gemäß a) ausgebildet ist und der Ausgleichsbereich (8) unmittelbar zwischen dem Abstiegsbereich (7) und einem Anstiegsbereich (6) eines angrenzenden Bandrückenprofilabschnitts (5) angeordnet ist, oder
der Bandrückenprofilabschnitt (5) gemäß b) ausgebildet ist und der Ausgleichsbereich (8) unmittelbar zwischen dem Anstiegsbereich (6) und einem Abstiegsbereich (7) eines angrenzenden Bandrückenprofilabschnitts (5) angeordnet ist.

3. Sägeband (1) nach mindestens einem der vorhergehenden Ansprüche, **dadurch gekennzeichnet, dass** der Bandrückenprofilabschnitt (5) durch den genau einen Anstiegsbereich (6), den genau einen Abstiegsbereich (7) und den genau einen Ausgleichsbereich (8) gebildet wird.

4. Sägeband (1) nach mindestens einem der vorhergehenden Ansprüche, **dadurch gekennzeichnet, dass** der Ausgleichsbereich (8) eine Länge (L_{Ausgleich}) von zwischen 30 mm und 150 mm aufweist.

5. Sägeband (1) nach mindestens einem der vorhergehenden Ansprüche, **dadurch gekennzeichnet, dass** der Ausgleichsbereich (8) eine Länge (L_{Ausgleich}) besitzt, die maximal 85 % der Länge (L_{Anstieg}) des Anstiegsbereichs (6) und der Länge (L_{Abstieg}) des Abstiegsbereichs (7) beträgt.

6. Sägeband (1) nach mindestens einem der vorhergehenden Ansprüche, **dadurch gekennzeichnet, dass** der Anstiegsbereich (6) einen anderen Neigungswinkel (β_{Anstieg}) und eine andere Länge (L_{Anstieg}) als der Abstiegsbereich (7) besitzt.

7. Sägeband (1) nach mindestens einem der vorhergehenden Ansprüche, **dadurch gekennzeichnet, dass**
der Abstiegsbereich (7) eine mindestens doppelt so große Länge (L_{Abstieg}) wie der Anstiegsbereich (6) besitzt, oder
der Anstiegsbereich (6) eine mindestens doppelt so große Länge (L_{Anstieg}) wie der Abstiegsbereich (7) besitzt.

8. Sägeband (1) nach Anspruch 6 oder 7, **dadurch gekennzeichnet, dass** der Ausgleichsbereich (8) eine Länge (L_{Ausgleich}) besitzt, die kleiner ist als die geringere Länge (L_{Anstieg}, L_{Abstieg}) von Anstiegsbereich (6) und Abstiegsbereich (7).

9. Sägeband (1) nach mindestens einem der vorhergehenden Ansprüche, **dadurch gekennzeichnet, dass** das Sägeband (1) eine ganzzahlige Mehrzahl von Bandrückenprofilabschnitten (5) aufweist.

10. Sägeband (1) nach mindestens einem der vorhergehenden Ansprüche, **dadurch gekennzeichnet, dass** das Sägeband (1) zwei Bandrückenprofilabschnitte (5) mit unterschiedlichen Längen (L_{Profil}) aufweist.

11. Sägeband (1) nach mindestens einem der vorhergehenden Ansprüche, **dadurch gekennzeichnet, dass** der Bandrückenprofilabschnitt (5) so hergestellt ist, dass die dadurch entstandenen Bearbeitungsriefen längs zum Sägeband (1) verlaufen.

12. Sägeband (1) nach mindestens einem der vorhergehenden Ansprüche, **dadurch gekennzeichnet, dass** der Zahntragekörper (2) an seiner den Zähnen (3) zugewandten Seite abgesehen von den Zähnen (3) unprofiliert ausgebildet ist.

13. Sägeband (1) nach mindestens einem der vorhergehenden Ansprüche, **dadurch gekennzeichnet, dass** die Zähne (3) in einer sich entlang des Zahntragekörpers (2) wiederholenden Gruppe angeordnet sind, wobei die Gruppe Folgendes aufweist:
einen Oberflächenzahn (C3) mit der größten Breite und der geringsten Höhe in der Gruppe, und
zwei Leistungszähne (C1, C2) mit größeren Höhen und geringeren Breiten als der Oberflächenzahn.

14. Sägeband (1) nach Anspruch 13, **dadurch gekennzeichnet, dass**
der Leistungszahn (C1) mit der größten Höhe und der geringsten Breite mehr als einmal in der Gruppe vorkommt, und/oder
der Oberflächenzahn (C3) mehr als einmal in der Gruppe vorkommt.

## Claims

1. A saw band (1), comprising:
a tooth supporting body (2),
a plurality of teeth (3) being arranged at the tooth supporting body (2), and
a band back (4) being located opposite to the teeth (3) and including a profiled back portion (5), the profiled back portion (5) including the following portions:
an inclination portion (6) in which the band back (4) is profiled such that its distance to the teeth (3) increases in a direction towards the end of the inclination portion (6),
a declination portion (7) in which the band back (4) is profiled such that its distance to the teeth (3) decreases in a direction towards the end of the declination portion (7),
a compensation portion (8) in which the band back (4) is non-profiled and designed to be straight such that its distance to the teeth (3) is constant, **characterised in that**
a) the declination portion (7) is located next to the end of the inclination portion (6) and the compensation portion (8) is located next to the end of the declination portion (7), the compensation portion (8) having a shorter length (L_{Ausgleich}) than the inclination portion (6) and a shorter length (L_{Ausgleich}) than the declination portion (7), or
b) the inclination portion (6) is located next to the end of the declination portion (7) and the compensation portion (8) is located next to the end of the inclination portion (6), the compensation portion (8) having a shorter length (L_{Ausgleich}) than the inclination portion (6) and a shorter length (L_{Ausgleich}) than the declination portion (7).

2. The saw band (1) of claim 1, **characterised in that**
the profiled back portion (5) is designed according to a) and the compensation portion (8) is located directly between the declination portion (7) and an inclination portion (6) of an adjacent profiled back portion (5), or
the profiled back portion (5) is designed according to b) and the compensation portion (8) is arranged directly between the inclination portion (6) and a declination portion (7) of an adjacent profiled back portion (5).

3. The saw band (1) of at least one of the preceding claims, **characterised in that** the profiled back portion (5) is formed by the only one inclination portion (6), the only one declination portion (7) and the only one compensation portion (8).

4. The saw band (1) of at least one of the preceding claims, **characterised in that** the compensation portion (8) has a length (L_{Ausgleich}) of between 30 mm and 150 mm.

5. The saw band (1) of at least one of the preceding claims, **characterised in that** the compensation portion (8) has a length (L_{Ausgleich}) being maximally 85 % of the length (L_{Anstieg}) of the inclination portion (6) and of the length (L_{Abstieg}) of the declination portion (7).

6. The saw band (1) of at least one of the preceding claims, **characterised in that** the inclination portion (6) has a different angle of inclination (β_{Anstieg}) and a different length (L_{Anstieg}) than the declination portion (7).

7. The saw band (1) of at least one of the preceding claims, **characterised in that**
the declination portion (7) has a length (L_{Abstieg}) being at least twice the length of the inclination portion (6), or
the inclination portion (6) has a length (L_{Anstieg}) being at least twice the length of the declination portion (7).

8. The saw band (1) of claim 6 or 7, **characterised in that** the compensation portion (8) has a length (L_{Ausgleich}) being shorter than the smaller length (L_{Anstieg,} L_{Abstieg}) of the inclination portion (6) and the declination portion (7).

9. The saw band (1) of at least one of the preceding claims, **characterised in that** the saw band (1) includes an integral number of profiled back portions (5).

10. The saw band (1) of at least one of the preceding claims, **characterised in that** the saw band (1) includes two profiled back portions (5) having different lengths (L_{Profil}).

11. The saw band (1) of at least one of the preceding claims, **characterised in that** the profiled back portion (5) is manufactured such that the machining grooves extend in the longitudinal direction of the saw band (1).

12. The saw band (1) of at least one of the preceding claims, **characterised in that** the tooth supporting body (2) is designed to be non-profiled at its side facing the teeth (3) with the exception of the teeth (3).

13. The saw band (1) of at least one of the preceding claims, **characterised in that** the teeth (3) are arranged in a group being repeated along the tooth supporting body (2), the group comprising:
a surface tooth (C3) having the greatest width and the smallest height in the group, and
two performance teeth (C1, C2) having greater heights and smaller widths than the surface tooth.

14. The saw band (1) of claim 13, **characterised in that**
the performance tooth (C1) having the greatest height and the smallest width is arranged more than once in the group, and/or
the surface tooth (C3) is arranged more than once in the group.

## Revendications

1. Ruban de scie (1), avec
un corps de support de dents (2),
une pluralité de dents (3) disposées sur le corps de support de dents (2), et
un dos de ruban (4) opposé aux dents (3) avec une portion profilée de dos de ruban (5), la portion profilée de dos de ruban (5) comprenant les parties suivantes:
une zone de montée (6), dans laquelle le dos du ruban (4) est profilé de façon à ce que, vu en direction de l'extrémité de la zone de montée (6), sa distance par rapport aux dents (3) augmente,
une zone de descente (7), dans laquelle le dos du ruban (4) est profilé de façon à ce que, vu en direction de l'extrémité de la zone de descente (7), sa distance par rapport aux dents (3) diminue,
une zone de compensation (8), dans laquelle le dos du ruban (4) n'est pas profilé et est conçu comme une droite, de façon à ce que sa distance par rapport aux dents (3) soit constante, **caractérisé en ce que**
a) la zone de descente (7) est disposée à la suite de l'extrémité de la zone de montée (6) et la zone de compensation (8) est disposée à la suite de l'extrémité de la zone de descente (7), la zone de compensation (8) présentant une longueur (L_{Ausgleich}) inférieure à la zone de montée (6) et une longueur (L_{Ausgleich}) inférieure à la zone de descente (7), ou
b) la zone de montée (6) est disposée à la suite de l'extrémité de la zone de descente (7) et la zone de compensation (8) est disposée à la suite de l'extrémité de la zone de montée (6), la zone de compensation (8) présentant une longueur (L_{Ausgleich}) inférieure à la zone de montée (6) et une longueur (L_{Ausgleich}) inférieure à la zone de descente (7).

2. Ruban de scie (1) selon la revendication 1, **caractérisé en ce que**
la portion profilée de dos de ruban (5) est conçue selon a) et la zone de compensation (8) est disposé directement entre la zone de descente (7) et une zone de montée (6) d'une portion profilée de dos de ruban (5) adjacente, ou
la portion profilée de dos de ruban (5) est conçue selon b) et la zone de compensation (8) est disposé directement entre la zone de montée (6) et une zone de descente (7) d'une portion profilée de dos de ruban (5) adjacente.

3. Ruban de scie (1) selon au moins une des revendications précédentes, **caractérisé en ce que** la portion profilée de dos de ruban (5) est constituée d'exactement une zone de montée (6), d'exactement une zone de descente (7) et d'exactement une zone de compensation (8).

4. Ruban de scie (1) selon au moins une des revendications précédentes, **caractérisé en ce que** la zone de compensation (8) présente une longueur (L_{Ausgleich}) entre 30 mm et 150 mm.

5. Ruban de scie (1) selon au moins une des revendications précédentes, **caractérisé en ce que** la zone de compensation (8) présente une longueur (L_{Ausgleich}) qui représente au maximum 85 % de la longueur (L_{Anstieg}) de la zone de montée (6) et de la longueur (L_{Abstieg}) de la zone de descente (7).

6. Ruban de scie (1) selon au moins une des revendications précédentes, **caractérisé en ce que** la zone de montée (6) présente un angle d'inclinaison (β_{Anstieg}) et une longueur (L_{anstieg}) différents de la zone de descente (7).

7. Ruban de scie (1) selon au moins une des revendications précédentes, **caractérisé en ce que**
la zone de descente (7) présente une longueur (L_{Abstieg}) au moins deux fois plus importante que la zone de montée (6), ou
la zone de montée (6) présente une longueur (L_{Anstieg}) au moins deux fois plus importante que la zone de descente (7).

8. Ruban de scie (1) selon la revendication 6 ou 7, **caractérisé en ce que** la zone de compensation (8) présente une longueur (L_{Ausgleich}) qui est inférieure à la longueur la plus faible (L_{Anstieg}, L_{Abstieg}) de la zone de montée (6) et de la zone de descente (7).

9. Ruban de scie (1) selon au moins une des revendications précédentes, **caractérisé en ce que** le ruban de scie (1) présente un nombre entier de portions profilées de dos de ruban (5).

10. Ruban de scie (1) selon au moins une des revendications précédentes, **caractérisé en ce que** le ruban de scie (1) comprend deux portions profilées de dos de ruban (5) avec différentes longueurs (L_{Profil}).

11. Ruban de scie (1) selon au moins une des revendications précédentes, **caractérisé en ce que** la portion profilée de dos de ruban (5) est fabriquée de façon à ce que les stries d'usinage qui en résultent s'étendent de manière longitudinale par rapport au ruban de scie (1).

12. Ruban de scie (1) selon au moins une des revendications précédentes, **caractérisé en ce que** le corps de support des dents (2) n'est pas profilé, à l'exception des dents (3), sur son côté orienté vers le les dents (3).

13. Ruban de scie (1) selon au moins une des revendications précédentes, **caractérisé en ce que** les dents (3) sont disposées dans un groupe se répétant le long du corps de support de dents (2), le groupe comprend ce qui suit:
une dent de surface (C3) avec la largeur la plus grande et la hauteur la plus faible du groupe, et
deux dents de puissance (C1, C2) avec des hauteurs plus grandes et des largeurs plus faibles que la dent de surface.

14. Ruban de scie (1) selon la revendication 13, **caractérisé en ce que**
la dent de puissance (C1), avec la hauteur la plus grande et la largeur la plus faible, revient plus d'une fois dans le groupe, et/ou
la dent de surface (C3) revient plus d'une fois dans le groupe.
